# EUROPEAN PATENT SPECIFICATION

(11) **EP 3 112 616 B1**
(45) Date of publication and mention of the grant of the patent: **29.07.2020**
(21) Application number: 16176128.3
(22) Date of filing: 24.06.2016
(51) Int. Cl.: F01D 25/26, F01D 25/30, F02C 7/18, F02C 7/20, F02K 1/38

(54) **POWER GENERATION SYSTEM EXHAUST COOLING**
STROMERZEUGUNGSSYSTEMABGASKÜHLUNG
REFROIDISSEMENT D'ÉCHAPPEMENT DE SYSTÈME DE GÉNÉRATION DE PUISSANCE

(30) Priority: 29.06.2015 US 201514753088
(43) Date of publication of application: 04.01.2017
(73) Proprietor: General Electric Company, Schenectady, NY 12345 (US)
(72) Inventor: REED, Robert Joseph, Greenville, SC South Carolina 29615 (US); DAVIS, Lewis Berkley Jr., Schenectady, NY New York 12345 (US); KULKARNI, Parag Prakash, Schenectady, NY New York 12345 (US)
(74) Representative: BRP Renaud & Partner mbB Rechtsanwälte Patentanwälte Steuerberater

(56) References cited:
- EP-A2- 1 643 113
- US-A- 4 131 432
- US-A1- 2010 024 379
- US-A1- 2011 158 876

## Description

### BACKGROUND OF THE INVENTION

The disclosure relates generally to power generation systems, and more particularly, to systems and methods for cooling the exhaust gas of power generation systems.

Exhaust gas from power generation systems, for example a simple cycle gas turbine power generation system, often must meet stringent regulatory requirements for the composition of the exhaust gas released into the atmosphere. One of the components typically found in the exhaust gas of a gas turbine power generation system and subject to regulation is nitrogen oxide (i.e., NOₓ), which includes, for example, nitric oxide and nitrogen dioxide. To remove NOₓ from the exhaust gas stream, technology such as selective catalytic reduction (SCR) is often utilized. In an SCR process, ammonia (NH₃) or the like reacts with the NOₓ and produces nitrogen (N₂) and water (H₂O).

The effectiveness of the SCR process depends in part on the temperature of the exhaust gas that is processed. The temperature of the exhaust gas from a gas turbine power generation system is often higher than about 1100°F (about 593°C). However, SCR catalysts need to operate at less than about 900°F (about 482°C) to maintain effectiveness over a reasonable catalyst lifespan. To this extent, the exhaust gas from a simple cycle gas turbine power generation system is typically cooled prior to SCR.

Large external blower systems have been used to reduce the exhaust gas temperature of a gas turbine power generation system below 900°F (about 482°C) by mixing a cooling gas, such as ambient air, with the exhaust gas. Because of the possibility of catalyst damage due to a failure of an external blower system, a redundant external blower system is typically utilized. These external blower systems include many components, such as blowers, motors, filters, air intake structures, and large ducts, which are expensive, bulky, and add to the operating cost of a gas turbine power generation system. Additionally, the external blower systems and the operation of the gas turbine power generation system are not inherently coupled, thus increasing the probability of SCR catalyst damage due to excess temperature during various modes of gas turbine operation. To prevent SCR catalyst damage due to excess temperature (e.g., if the external blower system(s) fail or cannot sufficiently cool the exhaust gas), the gas turbine may need to be shut down until the temperature issue can be rectified. EP 1 643 113 describes an airflow system for a gas turbine engine. Ducts direct airflow through and around the engine.

An apparatus for the treatment of gas turbine exhaust gas according to the prior art is also known from the document US 4 131 432.

### BRIEF DESCRIPTION OF THE INVENTION

A first aspect of the disclosure provides a system comprising: a gas turbine system comprising a compressor component; an airflow generation system for attachment to a rotatable shaft of the gas turbine system, the airflow generation system and the compressor component drawing in an excess flow of air through an air intake section; a mixing area for receiving an exhaust gas stream produced by the gas turbine system; an air extraction system for extracting at least a portion of the excess flow of air generated by the airflow generation system and the compressor component to provide bypass air, and for diverting the bypass air into the mixing area to reduce a temperature of the exhaust gas stream; an exhaust processing system, and an air diversion system for diverting a portion of the bypass air to an exhaust processing system, wherein the exhaust processing system comprises a selective catalytic reduction (SCR) system for processing the reduced temperature exhaust gas stream.

A second aspect of the disclosure provides a power generation system comprising a system according to the first aspect.

The illustrative aspects of the present disclosure are designed to solve the problems herein described and/or other problems not discussed.

### BRIEF DESCRIPTION OF THE DRAWINGS

These and other features of this disclosure will be more readily understood from the following detailed description of the various aspects of the disclosure taken in conjunction with the accompanying drawing that depicts various embodiments of the disclosure.
FIG. 1 shows a schematic diagram of a simple cycle gas turbine power generation system according to embodiments.
FIG. 2 depicts an enlarged view of a portion of the gas turbine power generation system of FIG. 1 according to embodiments.
FIG. 3 shows a schematic diagram of a simple cycle gas turbine power generation system according to embodiments.
FIG. 4 depicts an enlarged view of a portion of the gas turbine power generation system of FIG. 3 according to embodiments.
FIG. 5 is an illustrative cross-sectional view of the bypass enclosure and the compressor component of the gas turbine system taken along line A--A of FIG. 3.
FIG. 6 is an illustrative cross-sectional view of the bypass enclosure and the compressor component of the gas turbine system taken along line B--B of FIG. 4.
FIG. 7 is a chart showing an illustrative relationship between the flow of bypass air into a mixing area and the temperature of the exhaust gas stream at different load percentages of a gas turbine system, according to embodiments.

It is noted that the drawing of the disclosure is not to scale. The drawing is intended to depict only typical aspects of the disclosure, and therefore should not be considered as limiting the scope of the disclosure. In the drawing, like numbering represents like elements between the drawings.

### DETAILED DESCRIPTION OF THE INVENTION

As indicated above, the disclosure relates generally to power generation systems, and more particularly, to systems and methods for cooling the exhaust gas of power generation systems.

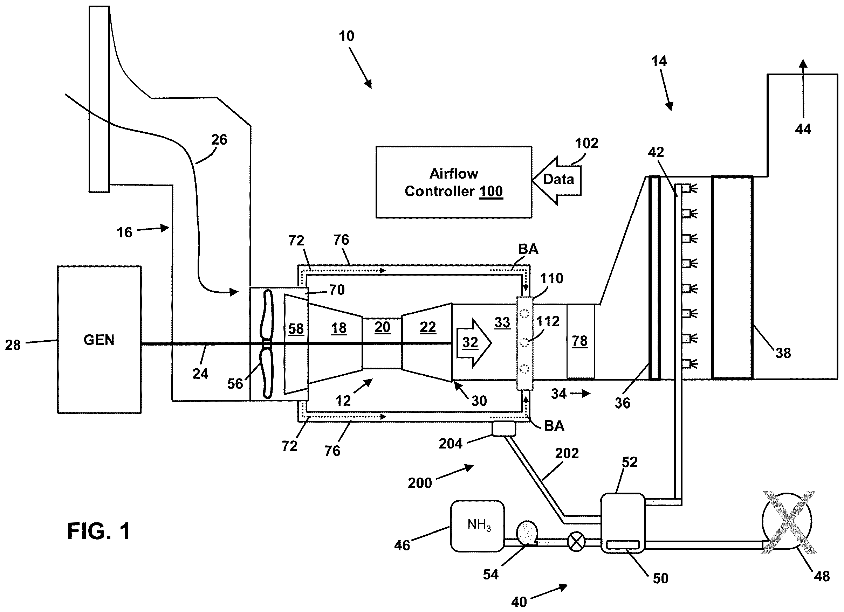

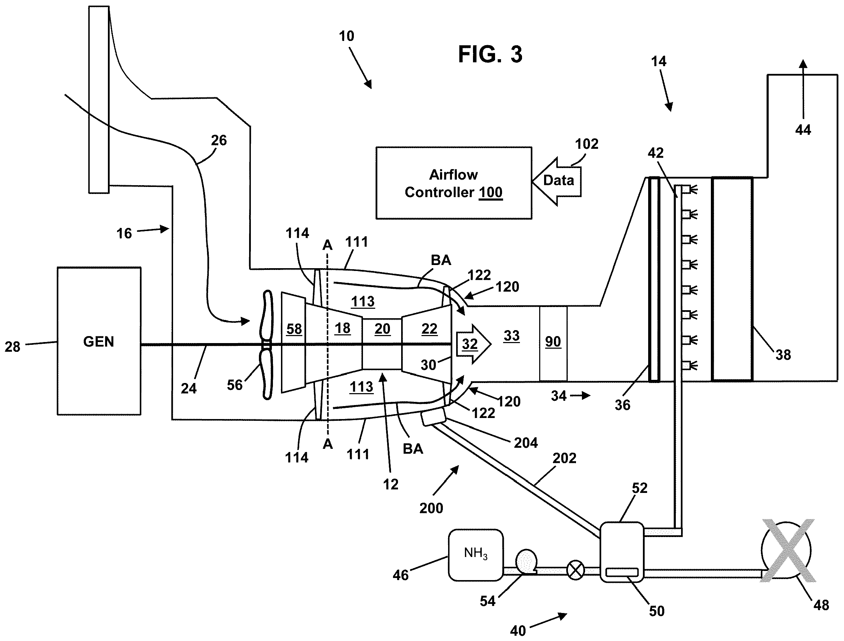

FIGS. 1 and 3 depict block diagrams of turbomachine systems (e.g., simple cycle gas turbine power generation systems 10) that include a gas turbine system 12 and an exhaust processing system 14. The gas turbine system 12 may combust liquid or gas fuel, such as natural gas and/or a hydrogen-rich synthetic gas, to generate hot combustion gases to drive the gas turbine system 12.

The gas turbine system 12 includes an air intake section 16, a compressor component 18, a combustor component 20, and a turbine component 22. The turbine component 22 is drivingly coupled to the compressor component 18 via a shaft 24. In operation, air (e.g., ambient air) enters the gas turbine system 12 through the air intake section 16 (indicated by arrow 26) and is pressurized in the compressor component 18. The compressor component 18 includes at least one stage including a plurality of compressor blades coupled to the shaft 24. Rotation of the shaft 24 causes a corresponding rotation of the compressor blades, thereby drawing air into the compressor component 18 via the air intake section 16 and compressing the air prior to entry into the combustor component 20.

The combustor component 20 may include one or more combustors. In embodiments, a plurality of combustors are disposed in the combustor component 20 at multiple circumferential positions in a generally circular or annular configuration about the shaft 24. As compressed air exits the compressor component 18 and enters the combustor component 20, the compressed air is mixed with fuel for combustion within the combustor(s). For example, the combustor(s) may include one or more fuel nozzles that are configured to inject a fuel-air mixture into the combustor(s) in a suitable ratio for combustion, emissions control, fuel consumption, power output, and so forth. Combustion of the fuel-air mixture generates hot pressurized exhaust gases, which may then be utilized to drive one or more turbine stages (each having a plurality of turbine blades) within the turbine component 22.

In operation, the combustion gases flowing into and through the turbine component 22 flow against and between the turbine blades, thereby driving the turbine blades and, thus, the shaft 24 into rotation. In the turbine component 22, the energy of the combustion gases is converted into work, some of which is used to drive the compressor component 18 through the rotating shaft 24, with the remainder available for useful work to drive a load such as, but not limited to, an electrical generator 28 for producing electricity, and/or another turbine.

The combustion gases that flow through the turbine component 22 exit the downstream end 30 of the turbine component 22 as a stream of exhaust gas 32. The exhaust gas stream 32 may continue to flow in a downstream direction 34 towards the exhaust processing system 14. The downstream end 30 of the turbine component 22 may be fluidly coupled via a mixing area 33 to a CO removal system (including, e.g., a CO catalyst 36) and an SCR system (including, e.g., an SCR catalyst 38) of the exhaust processing system 14. As discussed above, as a result of the combustion process, the exhaust gas stream 32 may include certain byproducts, such as nitrogen oxides (NOₓ), sulfur oxides (SOₓ), carbon oxides (COₓ), and unburned hydrocarbons. Due to certain regulatory requirements, an exhaust processing system 14 may be employed to reduce or substantially minimize the concentration of such byproducts prior to atmospheric release.

One technique for removing or reducing the amount of NOₓ in the exhaust gas stream 32 is by using a selective catalytic reduction (SCR) process. For example, in an SCR process for removing NOₓ from the exhaust gas stream 32, ammonia (NH₃) or other suitable reductant may be injected into the exhaust gas stream 32. The ammonia reacts with the NOₓ to produce nitrogen (N₂) and water (H₂O).

As shown in FIGS. 1 and 3, an ammonia evaporator system 40 and an ammonia injection grid 42 may be used to vaporize and inject an ammonia solution (e.g., stored in a tank 46) into the exhaust gas stream 32 upstream of the SCR catalyst 38. The ammonia injection grid 42 may include, for example, a network of pipes with openings/nozzles for injecting vaporized ammonia into the exhaust gas stream 32. As will be appreciated, the ammonia and NOₓ in the exhaust gas stream 32 react as they pass through the SCR catalyst 38 to produce nitrogen (N₂) and water (H₂O), thus removing NOₓ from the exhaust gas stream 32. The resulting emissions may be released into the atmosphere through a stack 44 of the gas turbine system 12.

Such an ammonia evaporator system 40 may include, for example, a blower system 48, one or more heaters 50 (e.g., electric heaters), and an ammonia vaporizer 52, for providing vaporized ammonia that is injected into the exhaust gas stream 32 via the ammonia injection grid 42. The ammonia may be pumped from the tank 46 to the ammonia vaporizer 52 using a pump system 54. The blower system 48 may include redundant blowers, while the pump system 54 may include redundant pumps to ensure continued operation of the ammonia evaporator system 40 in case of individual blower/pump failure.

The effectiveness of the SCR process depends in part on the temperature of the exhaust gas stream 32 that is processed. The temperature of the exhaust gas stream 32 generated by the gas turbine system 12 is often higher than about 1100°F (about 593°C). However, the SCR catalyst 38 typically needs to operate at temperatures less than about 900°F (about 482°C).

According to embodiments, a fan 56 and an "oversized" compressor component 18 may be used to provide cooling air for lowering the temperature of the exhaust gas stream 32 to a level suitable for the SCR catalyst 38. As depicted in FIG. 1, the fan 56 may be coupled to the shaft 24 of the gas turbine system 12 upstream of the gas turbine system 12 to provide cooling air (e.g., ambient air) drawn in through the air intake section 16 that may be used to lower the temperature of the exhaust gas stream 32. The fan 56 may be fixedly mounted (e.g. bolted, welded, etc.) to the shaft 24 of the gas turbine system 12. To this extent, the fan 56 is configured to rotate at the same rotational speed as the shaft 24. In other embodiments, a clutch mechanism may used to releasably couple the fan 56 to the shaft 24 of the gas turbine system 12. This allows the fan 56 to be selectively decoupled from the shaft 24 if not needed. When the clutch mechanism is engaged, the fan 56 is coupled to the shaft 24 and is configured to rotate at the same rotational speed as the shaft 24. Clutch coupling/decoupling commands may be provided to the clutch mechanism via an airflow controller 100. An adjustable speed drive system may also be used to couple the fan 56 to the shaft 24 to allow the fan 56 to be rotated at a different speed than the shaft 24.

The compressor component 18 has a flow rate capacity and is configured to draw in a flow of air (ambient air) via the air intake section 16 based on its flow rate capacity. The flow rate capacity of the combination of the fan 56 and the compressor component 18 may be about 10% to about 40% greater than the flow rate capacity of at least one of the combustor component 20 and the turbine component 22, creating an excess flow of air. That is, at least one of the combustor component 20 and the turbine component 22 cannot take advantage of all of the air provided by the combination of the fan 56 and compressor component 18, and an excess flow of air is created. This excess flow of air may be used to cool the exhaust gas stream 32 of the gas turbine system 12. According to embodiments, at least one of the compressor stages 58 of the compressor component 18 may be "oversized" in order to provide at least some of the excess flow of air. As detailed below, the 10% to 40% additional flow of air may be used to cool the exhaust gas stream 32 and, if desired, to supercharge the gas turbine system 12. Use of a single oversized compressor stage 58 is described below; however, this is not intended to be limiting and additional oversized compressor stages 58 may be used in other embodiments. In general, the percentage increase in the flow of air may be varied and selectively controlled based on several factors including the load on the gas turbine system 12, the temperature of the air being drawn into the gas turbine system 12, the temperature of the exhaust gas stream 32 at the SCR catalyst 38, etc.

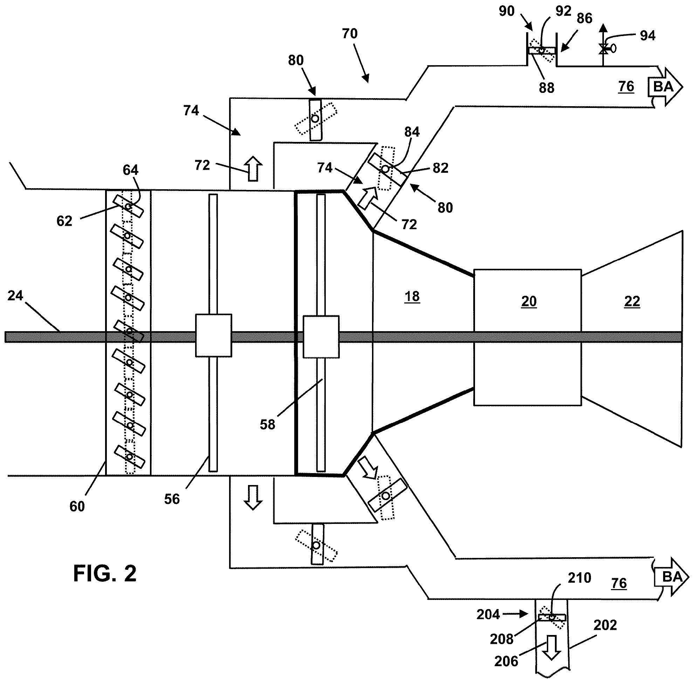

As depicted in FIG. 2, an inlet guide vane assembly 60 including a plurality of inlet guide vanes 62 may be used to control the amount of air available to the fan 56 and the compressor component 18. Each inlet guide vane 62 may be selectively controlled (e.g., rotated) by an independent actuator 64. The actuators 64 according to various embodiments are shown schematically in FIG. 2, but any known actuator may be utilized. For example, the actuators 64 may comprise an electro-mechanical motor, or any other type of suitable actuator.

The actuators 64 may be independently and/or collectively controlled in response to commands from the airflow controller 100 to selectively vary the positioning of the inlet guide vanes 62. That is, the inlet guide vanes 62 may be selectively rotated about a pivot axis by the actuators 64. In embodiments, each inlet guide vane 62 may be individually pivoted independently of any other inlet guide vane 62. In other embodiments, groups of inlet guide vanes 62 may be pivoted independently of other groups of inlet guide vanes 62 (i.e., pivoted in groups of two or more such that every inlet guide vane 62 in a group rotates together the same amount). Position information (e.g., as sensed by electro-mechanical sensors or the like) for each of the inlet guide vanes 62 may be provided to the airflow controller 100.

The increased flow of air provided by the combination of the fan 56 and the oversized compressor stage 58 of the compressor component 18 may increase the air pressure at the compressor component 18. For example, the increased flow of air provided by the operation of the fan 56 and the oversized compressor stage 58 of the compressor component 18 may provide a pressure increase of about 5 to about 15 inches of water. This pressure increase may be used to overcome pressure drop and facilitate proper mixing (described below) of cooler air with the exhaust gas stream 32 in the downstream exhaust processing system 14. The pressure increase may also be used to supercharge the gas turbine system 12.

Referring to FIGS. 1 and 2, an air extraction system 70 may be employed to extract at least some of the additional flow of air provided by the fan 56 and the oversized compressor stage 58 of the compressor component 18. A flow of air 72 may be extracted using, for example, one or more extraction ducts 74 (FIG. 2). The extracted air, or "bypass air" (BA) does not enter the gas turbine system 12, but is instead directed to the mixing area 33 through bypass ducts 76 as indicated by arrows BA, where the bypass air may be used to cool the exhaust gas stream 32. The remaining air (i.e., any portion of the additional flow of air not extracted via the extraction ducts 74) enters the compressor component 18 of the gas turbine system 12 and flows through the gas turbine system 12 in a normal fashion. If the flow of remaining air is greater than the nominal airflow of the gas turbine system 12, a supercharging of the gas turbine system 12 may occur, increasing the efficiency and power output of the gas turbine system 12.

The bypass air may be routed toward the mixing area 33 downstream of the turbine component 22 through one or more bypass ducts 76. The bypass air exits the bypass ducts 76 and enters the mixing area 33 through a bypass air injection grid 110 (FIG. 1), where the bypass air (e.g., ambient air) mixes with and cools the exhaust gas stream 32 to a temperature appropriate for use with the SCR catalyst 38. In embodiments, the temperature of the exhaust gas stream 32 generated by the gas turbine system 12 is cooled by the bypass air from about 1100°F (about 593°C) to less than about 900°F (about 482°C) in the mixing area 33. The bypass air injection grid 110 may comprise, for example, a plurality of nozzles 112 or the like for directing (e.g., injecting) the bypass air into the mixing area 33. The nozzles 112 of the bypass air injection grid 110 may be distributed about the mixing area 33 in such a way as to maximize mixing of the bypass air and the exhaust gas stream 32 in the mixing area 33. The nozzles 112 of the bypass air injection grid 110 may be fixed in position and/or may be movable to selectively adjust the injection direction of bypass air into the mixing area 33.

A supplemental mixing system 78 (FIG. 1) may be positioned within the mixing area 33 to enhance the mixing process. The supplemental mixing system 78 may comprise, for example, a static mixer, baffles, and/or the like. The CO catalyst 36 may also help to improve the mixing process by adding back pressure (e.g., directed back toward the turbine component 22).

As depicted in FIG. 2, the air flow 72 into each extraction duct 74 may be selectively and/or independently controlled using a flow restriction system 80 comprising, for example, a damper 82, guide vane, valve, or other device capable of selectively restricting airflow. Each damper 82 may be selectively and controlled (e.g., rotated) by an independent actuator 84. The actuators 84 may comprise electro-mechanical motors, or any other type of suitable actuator. The dampers 82 may be independently and/or collectively controlled in response to commands from the airflow controller 100 to selectively vary the positioning of the dampers 82 such that a desired amount of bypass air is directed into the mixing area 33 via the bypass ducts 76. Position information (e.g., as sensed by electro-mechanical sensors or the like) for each of the dampers 82 may be provided to the airflow controller 100.

Bypass air may be selectively released from one or more of the bypass ducts 76 using an air release system 86 comprising, for example, one or more dampers 88 (or other devices capable of selectively restricting airflow, e.g. guide vanes) located in one or more air outlets 90. The position of a damper 88 within an air outlet 90 may be selectively controlled (e.g., rotated) by an independent actuator 92. The actuator 92 may comprise an electro-mechanical motor, or any other type of suitable actuator. Each damper 88 may be controlled in response to commands from the airflow controller 100 to selectively vary the positioning of the damper 88 such that a desired amount of bypass air may be released from an bypass duct 76. Position information (e.g., as sensed by electro-mechanical sensors or the like) for each damper 88 may be provided to the airflow controller 100. Further airflow control may be provided by releasing bypass air from one or more of the bypass ducts 76 through one or more metering valves 94 controlled via commands from the airflow controller 100.

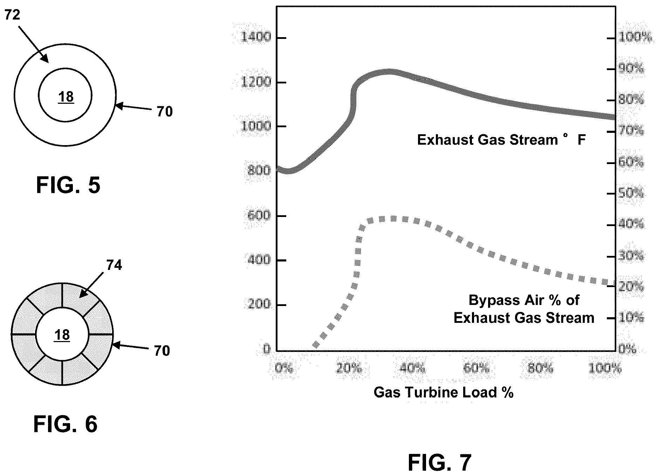

The airflow controller 100 may be used to regulate the amount of air generated by the fan 56 and the oversized compressor stage 58 of the compressor component 18 that is diverted as bypass air through the bypass ducts 76 and into the mixing area 33 relative to the amount of air that enters the gas turbine system 12 (and exits as the exhaust gas stream 32) in order to maintain a suitable temperature at the SCR catalyst 38 under varying operating conditions. A chart showing an illustrative relationship between the flow of bypass air into the mixing area 33 and the temperature of the exhaust gas stream 32 at different load percentages of the gas turbine system 12 is provided in FIG. 7. In this example, the chart in FIG. 7 depicts: 1) temperature variation of an exhaust gas stream 32 of a gas turbine system 12 at different load percentages of the gas turbine system 12; and 2) corresponding variation in the flow of bypass air as a percentage of the exhaust gas stream 32 (bypass ratio) needed to maintain the temperature at the SCR catalyst 38 at an appropriate level (e.g., 900°F (about 482°C)) at different load percentages of the gas turbine system 12. As represented in the chart in FIG. 7, the amount of bypass air flowing through the bypass ducts 76 into the mixing area 33 may be varied (e.g., under control of the airflow controller 100) as the temperature of the exhaust gas stream 32 changes, in order to regulate the temperature at the SCR catalyst 38.

The airflow controller 100 may receive data 102 associated with the operation of the gas turbine power generation system 10. Such data may include, for example, the temperature of the exhaust gas stream 32 as it enters the mixing area 33, the temperature of the exhaust gas stream 32 at the SCR catalyst 38 after mixing/cooling has occurred in the mixing area 33, the temperature of the air drawn into the air intake section 16 by the fan 56 and the compressor component 18 of the gas turbine system 12, and other temperature data obtained at various locations within the gas turbine power generation system 10. The data 102 may further include airflow and pressure data obtained, for example, within the air intake section 16, at the inlet guide vanes 62, at the fan 56, at the entrance of the oversized compressor stage 58 and/or other stages of the compressor component 18, within the extraction ducts 74, within the bypass ducts 76, at the downstream end 30 of the turbine component 22, and at various other locations within the gas turbine power generation system 10. Load data, fuel consumption data, and other information associated with the operation of the gas turbine system 12 may also be provided to the airflow controller 100. The airflow controller 100 may further receive positional information associated with the inlet guide vanes 62, dampers 82 and 88, valve 94, etc. It should be readily apparent to those skilled in the art how such data may be obtained (e.g., using appropriate sensors, feedback data, etc.), and further details regarding the obtaining of such data will not be provided herein.

Based on the received data 102, the airflow controller 100 is configured to vary as needed the amount of bypass air flowing through the bypass ducts 76 into the mixing area 33 to maintain the temperature at the SCR catalyst 38 at a suitable level. This may be achieved, for example, by varying at least one of: the flow of air drawn into the air intake section 16 by the combined action of the fan 56 and the compressor component 18 of the gas turbine system 12 (this flow may be controlled, for example, by adjusting the position of one or more of the inlet guide vanes 64 and/or by increasing the rotational speed of the shaft 24); the flow of air 72 into the extraction ducts 74 (this flow may be controlled, for example, by adjusting the position of one or more of the dampers 82); and the flow of bypass air passing from the extraction ducts 74, through the bypass ducts 76, into the mixing area 33 (this flow may be controlled, for example, by adjusting the position of one or more of the dampers 88 and/or the operational status of the metering valves 94).

The airflow controller 100 may include a computer system having at least one processor that executes program code configured to control the amount of bypass air flowing through the bypass ducts 76 into the mixing area 33 using, for example, data 102 and/or instructions from human operators. The commands generated by the airflow controller 100 may be used to control the operation of various components (e.g., such as actuators 64, 84, 92, valve 94, and/or the like) in the gas turbine power generation system 10. For example, the commands generated by the airflow controller 100 may be used to control the operation of the actuators 64, 84, and 92 to control the rotational position of the inlet guide vanes 62, dampers 82, and dampers 88, respectively. Commands generated by the airflow controller 100 may also be used to activate other control settings in the gas turbine power generation system 10.

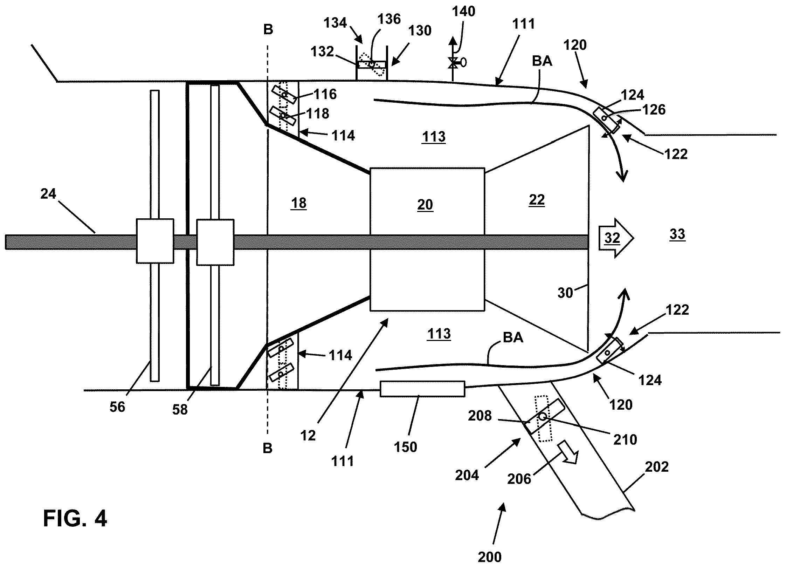

As depicted in FIGS. 3 and 4, instead of using external bypass ducts 76, the gas turbine system 12 may be surrounded by a bypass enclosure 111. The bypass enclosure 111 extends from, and fluidly couples, the air intake section 16 to the mixing area 33. The bypass enclosure 111 may have any suitable configuration. For instance, the bypass enclosure 111 may have an annular configuration as depicted in FIG. 5, which is a cross-section taken along line A--A in FIG. 3. The bypass enclosure 111 forms an air passage 113 around the gas turbine system 12 through which a supply of cooling bypass air (BA) may be provided for cooling the exhaust gas stream 32 of the gas turbine system 12.

An air extraction system 114 may be provided to extract at least some of the additional flow of air provided by the fan 56 and the oversized compressor stage 58 of the compressor component 18 and to direct the extracted air into the air passage 113 formed between the bypass enclosure 111 and the gas turbine system 12. The air extraction system 114 may comprise, for example, inlet guide vanes, a stator, or any other suitable system for selectively directing a flow of air into the air passage 113. In the following description, the air extraction system 114 comprises, but is not limited to, inlet guide vanes. As shown in FIG. 6, which is a cross-section taken along line B--B in FIG. 4, the air extraction system 114 may extend completely around the entrance to the air passage 113 formed between the bypass enclosure 111 and the compressor component 18 of the gas turbine system 12.

As depicted in FIG. 4, the air extraction system 114 may include a plurality of inlet guide vanes 116 for controlling the amount of air directed into the air passage 113 formed between the bypass enclosure 111 and the gas turbine system 12. Each inlet guide vane 116 may be selectively and independently controlled (e.g., rotated) by an independent actuator 118. The actuators 118 are shown schematically in FIG. 4, but any known actuator may be utilized. For example, the actuators 118 may comprise an electro-mechanical motor, or any other type of suitable actuator.

The actuators 118 of the air extraction system 114 may be independently and/or collectively controlled in response to commands from the airflow controller 100 to selectively vary the positioning of the inlet guide vanes 116. That is, the inlet guide vanes 116 may be selectively rotated about a pivot axis by the actuators 118. In embodiments, each inlet guide vane 116 may be individually pivoted independently of any other inlet guide vane 116. In other embodiments, groups of inlet guide vanes 116 may be pivoted independently of other groups of inlet guide vanes 116 (i.e., pivoted in groups of two or more such that every inlet guide vane 116 in a group rotates together the same amount). Position information (e.g., as sensed by electro-mechanical sensors or the like) for each of the inlet guide vanes 116 may be provided to the airflow controller 100.

The bypass air does not enter the gas turbine system 12, but is instead directed to the mixing area 33 through the air passage 113 as indicated by arrows BA, where the bypass air may be used to cool the exhaust gas stream 32. The remaining air (i.e., any portion of the additional flow of air generated by the fan 56 and the oversized compressor stage 58 not extracted via the air extraction system 114) enters the compressor component 18 of the gas turbine system 12 and flows through the gas turbine system 12 in a normal fashion. If the flow of remaining air is greater than the flow rate capacity of the gas turbine system 12, a supercharging of the gas turbine system 12 may occur, increasing the efficiency and power output of the gas turbine system 12.

The bypass air flows toward and into the mixing area 33 downstream of the turbine component 22 through the air passage 113. In embodiments, the bypass air exits the air passage 113 and is directed at an angle toward and into the exhaust gas stream 32 in the mixing area 33 to enhance mixing. In the mixing area 33, the bypass air (e.g., ambient air) mixes with and cools the exhaust gas stream 32 to a temperature suitable for use with the SCR catalyst 38. In embodiments, the temperature of the exhaust gas stream 32 generated by the gas turbine system 12 is cooled by the bypass air from about 1100°F (about 593°C) to less than about 900°F (about 482°C) in the mixing area 33.

As depicted in FIGS. 3 and 4, the distal end 120 of the bypass enclosure 111 may curve inwardly toward the mixing area 33 to direct the bypass air at an angle toward and into the exhaust gas stream 32 in the mixing area 33. The intersecting flows of the bypass air and the exhaust gas stream 32 may facilitate mixing, thereby enhancing the cooling of the exhaust gas stream 32. A flow directing system 122 may also be provided to direct the bypass air at an angle toward and into the exhaust gas stream 32. Such a flow directing system 122 may include, for example, outlet guide vanes, stators, nozzles, or any other suitable system for selectively directing the flow of bypass air into the mixing area 33.

An illustrative flow directing system 122 is shown in FIG. 4. In this example, the flow directing system 122 includes a plurality of outlet guide vanes 124. Each outlet guide vane 124 may be selectively controlled (e.g., rotated) by an independent actuator 126. The actuators 126 are shown schematically in FIG. 4, but any known actuator may be utilized. For example, the actuators 126 may comprise an electro-mechanical motor, or any other type of suitable actuator. In embodiments, the flow directing system 122 may extend completely around the exit of the air passage 113 formed between the bypass enclosure 111 and the turbine component 22 of the gas turbine system 12.

A supplemental mixing system 78 (FIG. 1) may be positioned within the mixing area 33 to enhance the mixing process. The supplemental mixing system 78 may comprise, for example, a static mixer, baffles, and/or the like. The CO catalyst 36 may also help to improve the mixing process by adding back pressure (e.g., directed back toward the turbine component 22).

As shown in FIG. 4, bypass air may be selectively released from the bypass enclosure 111 using an air release system 130 comprising, for example, one or more dampers 132 (or other devices capable of selectively restricting airflow, e.g. guide vanes) located in one or more air outlets 134. The position of a damper 132 within an air outlet 134 may be selectively controlled (e.g., rotated) by an independent actuator 136. The actuator 136 may comprise an electro-mechanical motor, or any other type of suitable actuator. Each damper 132 may be controlled in response to commands from the airflow controller 100 to selectively vary the positioning of the damper 132 such that a desired amount of bypass air may be released from the bypass enclosure 111. Position information (e.g., as sensed by electro-mechanical sensors or the like) for each damper 132 may be provided to the airflow controller 100. Further airflow control may be provided by releasing bypass air from the bypass enclosure 111 through one or more metering valves 140 (FIG. 4) controlled via commands from the airflow controller 100.

The airflow controller 100 may be used to regulate the amount of air generated by the fan 56 and the oversized compressor stage 58 of the compressor component 18 that is diverted as bypass air into the mixing area 33 through the air passage 113 relative to the amount of air that enters the gas turbine system 12 (and exits as the exhaust gas stream 32) in order to maintain a suitable temperature at the SCR catalyst 38 under varying operating conditions. The amount of bypass air flowing through the air passage 113 into the mixing area 33 may be varied (e.g., under control of the airflow controller 100) as the temperature of the exhaust gas stream 32 changes, in order to regulate the temperature at the SCR catalyst 38.

As shown schematically in FIG. 4, the bypass enclosure 111 may be provided with one or more access doors 150. The access doors 150 provide access through the bypass enclosure 111 to the various components of the gas turbine system 12 (e.g., for servicing, repair, etc.).

As detailed above, the airflow controller 100 may receive a wide variety of data 102 associated with the operation of the gas turbine power generation system 10 and the components thereof. Based on the received data 102, the airflow controller 100 is configured to vary as needed the amount of bypass air flowing through the air passage 113 into the mixing area 33 to regulate the temperature at the SCR catalyst 38. This may be achieved, for example, by varying at least one of: the flow of air drawn into the air intake section 16 by the fan 56 and compressor component 18 of the gas turbine system 12; the flow of air directed into the air passage 113 via the air extraction system 114 (this flow may be controlled, for example, by adjusting the position of one or more of the inlet guide vanes 116); and the flow of bypass air passing through the air passage 113 into the mixing area 33 (this flow may be controlled, for example, by adjusting the position of one or more of the dampers 132 and/or the operational status of the metering valves 140).

In embodiments, as depicted in FIGS. 1 and 3, an air diversion system 200 including, for example, an air conduit 202 and a flow control component 204, may be used in lieu of a blower system 48 to selectively direct a portion of the bypass air to the ammonia vaporizer 52 of the ammonia evaporator system 40. In this way, the diverted bypass air may be used to drive ammonia evaporation in the ammonia evaporator system 40. To this extent, the blower system 48 may be eliminated from the ammonia evaporator system 40 as indicated by the "X" in FIGS. 1 and 3.

In other embodiments, the air diversion system including 200 may be used in combination with a blower system 48. In such a case, a smaller blower system 48 may be used, since the diverted bypass air provided via the air diversion system including 200 drives at least some of the ammonia evaporation in the ammonia evaporator system 40. The need for a redundant blower may also be eliminated.

An enlarged view of an illustrative flow control component 204 is provided in FIGS. 2 and 4. As shown, the flow of air 206 into the air conduit 202 may be selectively controlled using a flow control component 204 comprising, for example, a damper 208, valve, or other device capable of selectively restricting airflow. The damper 208 may be selectively controlled (e.g., rotated) by an actuator 210. The actuator 210 may comprise an electro-mechanical motor, or any other type of suitable actuator. The damper 208 may be controlled in response to commands from the airflow controller 100 to selectively vary the positioning of the damper 208 such that a desired flow of air 206 is directed to the ammonia vaporizer 52. Position information (e.g., as sensed by an electro-mechanical sensor or the like) for the damper 208 and data regarding the flow of air 206 through the air conduit 202 may be provided to the airflow controller 100.

The use of an airflow generation system including a fan 56 and a compressor component 18 including an oversized compressor stage 58 in lieu of conventional large external blower systems and/or other conventional cooling structures provides many advantages. For example, the need for redundant external blower systems and associated components (e.g., blowers, motors and associated air intake structures, filters, ducts, etc.) is eliminated. This reduces manufacturing and operating costs, as well as the overall footprint, of the gas turbine power generation system 10. The footprint is further reduced as the fan 56 and oversized compressor stage 58 draw in air through an existing air intake section 16, rather than through separate, dedicated intake structures often used with external blower systems. Further cost reduction is possible by diverting a portion of the bypass air to the ammonia vaporizer 52 via the air conduit 202, thereby eliminating the need for (or reducing the size of) the blower system 48.

Use of the fan 56 and oversized compressor stage 58 provides a more reliable and efficient gas turbine power generation system 10. For example, since the bypass air used for cooling in the mixing area 33 is driven by the shaft 24 of the gas turbine system 12 itself, large external blower systems are no longer required. Further, at least a portion of the higher than nominal flow of air generated by the fan 56 and oversized compressor stage 58 may be used to supercharge the gas turbine system 12.

Power requirements of the gas turbine power generation system 10 are reduced because the fan 56 and oversized compressor stage 58 are coupled to, and driven by, the shaft 24 of the gas turbine system 12. This configuration eliminates the need for large blower motors commonly used in conventional external blower cooling systems. Further power reduction may be achieved by eliminating (or reducing the size of) the blower system 48 and instead providing a flow of air 206 air to the ammonia vaporizer 52 of the ammonia evaporator system 40 via the conduit 202.

In various embodiments, components described as being "coupled" to one another can be joined along one or more interfaces. In some embodiments, these interfaces can include junctions between distinct components, and in other cases, these interfaces can include a solidly and/or integrally formed interconnection. That is, in some cases, components that are "coupled" to one another can be simultaneously formed to define a single continuous member. However, in other embodiments, these coupled components can be formed as separate members and be subsequently joined through known processes (e.g., fastening, ultrasonic welding, bonding).

When an element or layer is referred to as being "on", "engaged to", "connected to" or "coupled to" another element, it may be directly on, engaged, connected or coupled to the other element, or intervening elements may be present. In contrast, when an element is referred to as being "directly on," "directly engaged to", "directly connected to" or "directly coupled to" another element, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention and also to enable any person skilled in the art to practice the invention, including making and using any devices or systems and performing any incorporated methods. The patentable scope of the invention is defined by the claims.

## Claims

1. A system, comprising:
a gas turbine system (12) comprising a compressor component (18);
an airflow generation system for attachment to a rotatable shaft (24) of the gas turbine system (12), the airflow generation system and the compressor component (18) drawing in an excess flow of air (72, 206) through an air intake section (16);
a mixing area (33) for receiving an exhaust gas stream (32) produced by the gas turbine system (12);
an air extraction system (70) for extracting at least a portion of the excess flow of air (72) generated by the airflow generation system and the compressor component (18) to provide bypass air, and for diverting the bypass air into the mixing area (33) to reduce a temperature of the exhaust gas stream (32);
an exhaust processing system (14); and
an air diversion system (200) for diverting a portion of the bypass air to the exhaust processing system (14);
wherein the exhaust processing system (14) comprises a selective catalytic reduction (SCR) system for processing the reduced temperature exhaust gas stream (32).

2. The system of claim 1, wherein the excess flow of air (72) generated by the airflow generation system and the compressor component (18) is about 10% to about 40% greater than a flow rate capacity of at least one of a combustor component (20) and a turbine component (22) of the gas turbine system (12).

3. The system of claim 1 or 2, wherein the compressor component (18) of the gas turbine system (12) includes at least one oversized compressor stage (58), and wherein the airflow generation system comprises a fan (56).

4. The system of any preceding claim, wherein the exhaust processing system (14) further comprises a reductant evaporator system for evaporating a supply of a reductant and a reductant injection system for injecting the evaporated reductant into the reduced temperature exhaust gas stream (32) upstream of the SCR system.

5. The system of claim 4, wherein the air extraction system (114) further comprises a bypass duct (76) for diverting the bypass air around the gas turbine system (12) into the mixing area (33) to reduce a temperature of the exhaust gas stream (32).

6. The system of claim 5, wherein the air diversion system (200) further comprises an air conduit (202) and a flow a control component for selectively controlling the flow of air (72) through the air conduit (202), the air conduit (202) fluidly coupling the bypass duct (76) and the reductant evaporator system, wherein the diverted portion of the bypass air is provided to the reductant evaporator system through the air conduit (202) to evaporate the reductant.

7. The system of claim 4, wherein the air extraction system (114) further comprises an enclosure surrounding the gas turbine system (12) and forming an air passage (113), the bypass air flowing through the air passage (113) into the mixing area (33) to reduce a temperature of the exhaust gas stream (32).

8. The system of claim 7, wherein the air diversion system (200) further comprises an air conduit (202) and a flow a control component for selectively controlling the flow of air (72) through the air conduit (202), the air conduit (202) fluidly coupling the enclosure and the reductant evaporator system, wherein the diverted portion of the bypass air is provided to the reductant evaporator system through the air conduit (202) to evaporate the reductant.

9. The system of any of claims 4 to 8, wherein the reductant includes ammonia.

10. A power generation system comprising the system of any preceding claim.

11. The power generation system of claim 10, wherein the gas turbine system (12) includes a combustor component (20) and a turbine component (22), and the compressor component (18) of the gas turbine system (12) includes at least one oversized compressor stage (58);
a fan (56) coupled to the shaft (24) upstream of the gas turbine system (12), the fan (56) and the at least one oversized compressor stage (58) of the compressor component (18), the fan (56) and the compressor stage (58) drawing in the excess flow of air (72) through the air intake section (16).

12. The power generation system of claim 11, wherein the exhaust processing system (14) further comprises a reductant evaporator system for evaporating a supply of a reductant and a reductant injection system for injecting the evaporated reductant into the reduced temperature exhaust gas stream (32) upstream of the SCR system.

13. The power generation system of claim 12, wherein the air extraction system (70) further comprises a bypass duct (76) for diverting the bypass air around the gas turbine system (12) into the mixing area (33) to reduce the temperature of the exhaust gas stream (32).

14. The power generation system of claim 13, wherein the air diversion system (200) further comprises an air conduit (202) and a flow a control component for selectively controlling the flow of air (72) through the air conduit (202), the air conduit (202) fluidly coupling the bypass duct (76) and the reductant evaporator system, wherein the diverted portion of the bypass air is provided to the reductant evaporator system through the air conduit (202) to evaporate the reductant.

15. The power generation system of claim 12, wherein the air extraction system (70) further comprises an enclosure surrounding the gas turbine system (12) and forming an air passage (113), the bypass air flowing through the air passage (113) into the mixing area (33) to reduce the temperature of the exhaust gas stream (32).

## Patentansprüche

1. System, umfassend:
ein Gasturbinensystem (12), das eine Verdichterkomponente (18) umfasst;
ein Luftstromerzeugungssystem zur Anbringung an einer drehbaren Welle (24) des Gasturbinensystems (12), sodass das Luftstromerzeugungssystem und die Verdichterkomponente (18) einen Überschussluftstrom (72, 206) durch einen Luftansaugabschnitt (16) ansaugen;
einen Mischbereich (33) zum Aufnehmen eines durch das Gasturbinensystem (12) erzeugten Abgasstroms (32);
ein Luftabsaugsystem (70) zum Absaugen mindestens eines Teils des durch das Luftstromerzeugungssystem und durch die Verdichterkomponente (18) erzeugten Überschussluftstroms (72), um Bypassluft bereitzustellen und um die Bypassluft in den Mischbereich (33) umzuleiten, sodass die Temperatur des Abgasstroms (32) verringert wird;
ein Abgasbehandlungssystem (14); und
ein Luftumleitungssystem (200) zum Umleiten eines Teils der Bypassluft zum Abgasbehandlungssystem (14);
wobei das Abgasbehandlungssystem (14) ein selektives katalytisches Reduktionssystem (SCR-System) zum Behandeln des eine herabgesetzte Temperatur aufweisenden Abgasstroms (32) umfasst.

2. System nach Anspruch 1, wobei der durch das Luftstromerzeugungssystem und durch die Verdichterkomponente (18) erzeugte Überschussluftstrom (72) die Durchsatzkapazität von mindestens einem aus einer Brennkammerkomponente (20) und einer Turbinenkomponente (22) des Gasturbinensystems (12) um ca. 10 % bis ca. 40 % übersteigt.

3. System nach Anspruch 1 oder 2, wobei die Verdichterkomponente (18) des Gasturbinensystems (12) mindestens eine überdimensionierte Verdichterstufe (58) einschließt und wobei das Luftstromerzeugungssystem einen Ventilator (56) umfasst.

4. System nach einem der vorstehenden Ansprüche, wobei das Abgasbehandlungssystem (14) ferner ein Reduktionsmittelverdampfersystem zum Verdampfen einer Zufuhr eines Reduktionsmittels und ein Reduktionsmitteleinspritzsystem zum Einspritzen des verdampften Reduktionsmittels in den eine herabgesetzte Temperatur aufweisenden Abgasstrom (32) in Strömungsrichtung vor dem SCR-System umfasst.

5. System nach Anspruch 4, wobei das Luftabsaugsystem (114) ferner einen Bypasskanal (76) zum Umleiten der Bypassluft um das Gasturbinensystem (12) in den Mischbereich (33) umfasst, um die Temperatur des Abgasstroms (32) herabzusetzen.

6. System nach Anspruch 5, wobei das Luftumleitungssystem (200) ferner eine Luftleitung (202) und eine Volumenstromsteuerungskomponente zum selektiven Steuern des Luftstroms (72) durch die Luftleitung (202) umfasst, wobei die Luftleitung (202) den Bypasskanal (76) fluidisch mit dem Reduktionsmittelverdampfersystem verbindet, wobei der umgeleitete Teil der Bypassluft dem Reduktionsmittelverdampfersystem durch die Luftleitung (202) bereitgestellt wird, um das Reduktionsmittel zu verdampfen.

7. System nach Anspruch 4, wobei das Luftabsaugsystem (114) ferner eine das Gasturbinensystem (12) umgebende und einen Luftdurchgang (113) bildende Ummantelung umfasst, wobei die Bypassluft durch den Luftdurchgang (113) in den Mischbereich (33) strömt, um die Temperatur des Abgasstroms (32) herabzusetzen.

8. System nach Anspruch 7, wobei das Luftumleitungssystem (200) ferner eine Luftleitung (202) und eine Volumenstromsteuerungskomponente zum selektiven Steuern des Luftstroms (72) durch die Luftleitung (202) umfasst, wobei die Luftleitung (202) die Ummantelung fluidisch mit dem Reduktionsmittelverdampfersystem verbindet, wobei der umgeleitete Teil der Bypassluft dem Reduktionsmittelverdampfersystem durch die Luftleitung (202) bereitgestellt wird, um das Reduktionsmittel zu verdampfen.

9. System nach einem der Ansprüche 4 bis 8, wobei das Reduktionsmittel Ammoniak einschließt.

10. Stromerzeugungssystem, umfassend das System nach einem der vorstehenden Ansprüche.

11. Stromerzeugungssystem nach Anspruch 10, wobei das Gasturbinensystem (12) eine Brennkammerkomponente (20) und eine Turbinenkomponente (22) einschließt und die Verdichterkomponente (18) des Gasturbinensystems (12) mindestens eine überdimensionierte Verdichterstufe (58) einschließt;
einen Ventilator (56), der in Strömungsrichtung vor dem Gasturbinensystem (12), dem Ventilator (56) und der mindestens einen überdimensionierten Verdichterstufe (58) der Verdichterkomponente (18) mit der Welle (24) verbunden ist, sodass der Ventilator (56) und die Verdichterstufe (58) den Überschussluftstrom (72) durch den Lufteinlassabschnitt (16) ansaugen.

12. Stromerzeugungssystem nach Anspruch 11, wobei das Abgasbehandlungssystem (14) ferner ein Reduktionsmittelverdampfersystem zum Verdampfen einer Zufuhr eines Reduktionsmittels und ein Reduktionsmitteleinspritzsystem zum Einspritzen des verdampften Reduktionsmittels in den eine herabgesetzte Temperatur aufweisenden Abgasstrom (32) in Strömungsrichtung vor dem SCR-System umfasst.

13. Stromerzeugungssystem nach Anspruch 12, wobei das Luftabsaugsystem (70) ferner einen Bypasskanal (76) zum Umleiten der Bypassluft um das Gasturbinensystem (12) in den Mischbereich (33) umfasst, um die Temperatur des Abgasstroms (32) herabzusetzen.

14. Stromerzeugungssystem nach Anspruch 13, wobei das Luftumleitungssystem (200) ferner eine Luftleitung (202) und eine Volumenstromsteuerungskomponente zum selektiven Steuern des Luftstroms (72) durch die Luftleitung (202) umfasst, wobei die Luftleitung (202) den Bypasskanal (76) fluidisch mit dem Reduktionsmittelverdampfersystem verbindet, wobei der umgeleitete Teil der Bypassluft dem Reduktionsmittelverdampfersystem durch die Luftleitung (202) bereitgestellt wird, um das Reduktionsmittel zu verdampfen.

15. Stromerzeugungssystem nach Anspruch 12, wobei das Luftabsaugsystem (70) ferner eine das Gasturbinensystem (12) umgebende und einen Luftdurchgang (113) bildende Ummantelung umfasst, wobei die Bypassluft durch den Luftdurchgang (113) in den Mischbereich (33) strömt, um die Temperatur des Abgasstroms (32) herabzusetzen.

## Revendications

1. Système, comprenant :
un système de turbine à gaz (12) comprenant un composant de compresseur (18) ;
un système de génération d'écoulement d'air pour la fixation à un arbre rotatif (24) du système de turbine à gaz (12), le système de génération d'écoulement d'air et le composant de compresseur (18) aspirant un excès d'écoulement d'air (72, 206) à travers une section d'admission d'air (16) ;
une zone de mélange (33) pour recevoir un flux de gaz d'échappement (32) produit par le système de turbine à gaz (12) ;
un système d'extraction d'air (70) pour extraire au moins une partie de l'excès d'écoulement d'air (72) généré par le système de génération d'écoulement d'air et le composant de compresseur (18) pour fournir de l'air de dérivation, et pour dévier l'air de dérivation dans la zone de mélange (33) pour réduire une température du flux de gaz d'échappement (32) ;
un système de traitement d'échappement (14) ; et
un système de déviation d'air (200) pour dévier une partie de l'air de dérivation vers le système de traitement d'échappement (14) ;
dans lequel le système de traitement d'échappement (14) comprend un système de réduction catalytique sélective (SCR) pour traiter le flux de gaz d'échappement à température réduite (32).

2. Système selon la revendication 1, dans lequel l'excès d'écoulement d'air (72) généré par le système de génération d'écoulement d'air et le composant de compresseur (18) est supérieur d'environ 10 % à environ 40 % à une capacité de débit d'écoulement d'au moins l'un d'un composant de chambre de combustion (20) et d'un composant de turbine (22) du système de turbine à gaz (12).

3. Système selon la revendication 1 ou 2, dans lequel le composant de compresseur (18) du système de turbine à gaz (12) inclut au moins un étage de compresseur surdimensionné (58), et dans lequel le système de génération d'écoulement d'air comprend un ventilateur (56).

4. Système selon une quelconque revendication précédente, dans lequel le système de traitement d'échappement (14) comprend en outre un système évaporateur de réducteur pour évaporer une alimentation d'un réducteur et un système d'injection de réducteur pour injecter le réducteur évaporé dans le flux de gaz d'échappement à température réduite (32) en amont du système SCR.

5. Système selon la revendication 4, dans lequel le système d'extraction d'air (114) comprend en outre un conduit de dérivation (76) pour dévier l'air de dérivation autour du système de turbine à gaz (12) dans la zone de mélange (33) pour réduire une température du flux de gaz d'échappement (32).

6. Système selon la revendication 5, dans lequel le système de dérivation d'air (200) comprend en outre un conduit d'air (202) et un composant de commande d'écoulement pour commander sélectivement l'écoulement d'air (72) à travers le conduit d'air (202), le conduit d'air (202) couplant de manière fluidique le conduit de dérivation (76) et le système évaporateur de réducteur, dans lequel la partie déviée de l'air de dérivation est fournie au système évaporateur de réducteur à travers le conduit d'air (202) pour évaporer le réducteur.

7. Système selon la revendication 4, dans lequel le système d'extraction d'air (114) comprend en outre une enceinte entourant le système de turbine à gaz (12) et formant un passage d'air (113), l'air de dérivation s'écoulant à travers le passage d'air (113) dans la zone de mélange (33) pour réduire une température du flux de gaz d'échappement (32).

8. Système selon la revendication 7, dans lequel le système de dérivation d'air (200) comprend en outre un conduit d'air (202) et un composant de commande d'écoulement pour commander sélectivement l'écoulement d'air (72) à travers le conduit d'air (202), le conduit d'air (202) couplant de manière fluidique l'enceinte et le système évaporateur de réducteur, dans lequel la partie déviée de l'air de dérivation est fournie au système évaporateur de réducteur à travers le conduit d'air (202) pour évaporer le réducteur.

9. Système selon l'une quelconque des revendications 4 à 8, dans lequel le réducteur inclut de l'ammoniac.

10. Système de génération d'énergie comprenant le système selon une quelconque revendication précédente.

11. Système de génération d'énergie selon la revendication 10, dans lequel le système de turbine à gaz (12) inclut un composant de chambre de combustion (20) et un composant de turbine (22), et le composant de compresseur (18) du système de turbine à gaz (12) inclut au moins un étage de compresseur surdimensionné (58) ;
un ventilateur (56) couplé à l'arbre (24) en amont du système de turbine à gaz (12), le ventilateur (56) et l'au moins un étage de compresseur surdimensionné (58) du composant de compresseur (18), le ventilateur (56) et l'étage de compresseur (58) aspirant l'excès d'écoulement d'air (72) à travers la section d'admission d'air (16).

12. Système de génération d'énergie selon la revendication 11, dans lequel le système de traitement d'échappement (14) comprend en outre un système évaporateur de réducteur pour évaporer une alimentation d'un réducteur et un système d'injection de réducteur pour injecter le réducteur évaporé dans le flux de gaz d'échappement à température réduite (32) en amont du système SCR.

13. Système de génération d'énergie selon la revendication 12, dans lequel le système d'extraction d'air (70) comprend en outre un conduit de dérivation (76) pour dévier l'air de dérivation autour du système de turbine à gaz (12) dans la zone de mélange (33) pour réduire la température du flux de gaz d'échappement (32).

14. Système de génération d'énergie selon la revendication 13, dans lequel le système de dérivation d'air (200) comprend en outre un conduit d'air (202) et un composant de commande d'écoulement pour commander sélectivement l'écoulement d'air (72) à travers le conduit d'air (202), le conduit d'air (202) couplant de manière fluidique le conduit de dérivation (76) et le système évaporateur de réducteur, dans lequel la partie déviée de l'air de dérivation est fournie au système évaporateur de réducteur à travers le conduit d'air (202) pour évaporer le réducteur.

15. Système de génération d'énergie selon la revendication 12, dans lequel le système d'extraction d'air (70) comprend en outre une enceinte entourant le système de turbine à gaz (12) et formant un passage d'air (113), l'air de dérivation s'écoulant à travers le passage d'air (113) dans la zone de mélange (33) pour réduire la température du flux de gaz d'échappement (32).
